Europäisches Patentamt

**European Patent Office**

Office européen des brevets

(11) Publication number : **0 490 620 A1**

# EUROPEAN PATENT APPLICATION

(21) Application number : **91311447.6**

(22) Date of filing : **09.12.91**

(51) Int. Cl.⁵ : **A01G 13/00**

(30) Priority : **13.12.90 GB 9027041**

(43) Date of publication of application :
**17.06.92 Bulletin 92/25**

(84) Designated Contracting States :
**AT BE CH DE DK ES FR GB GR IT LI LU MC NL
SE**

(71) Applicant : **CORRUPLAST LIMITED
Correx House Madleaze Industrial Estate
Bristol Road Gloucester, GL1 5SG (GB)**

(72) Inventor : **Haines, Clive Peter
"Woodcroft"
Tibberton, Gloucestershire GL19 3AQ (GB)**

(74) Representative : **Johnson, Terence Leslie et al
Edward Evans & Co. Chancery House 53-64
Chancery Lane
London WC2A 1SD (GB)**

(54) **A blank.**

(57) The invention relates to a blank for erection to provide a shelter for a plant such as a tree, characterised by a plurality of elongate panel members (3,4), by the panel members (3,4) being connected at or along adjacent longitudinal edges (5) which are built-in during forming the blank (1) and by each panel member (3,4) having a shape (6) in end elevation which with another profile or profiles when the shelter is erected defines a space in which a plant may be received.

The invention extends to a tree shelter erected from a blank 1 as decribed.

EP 0 490 620 A1

The invention relates to blank, particularly for erection to provide a shelter for a plant such as a tree.

Plants such as young trees or saplings often require protection when growing. Such protection is necessary to ensure that the plant is healthy and protected against the elements, such as wind, or animals.

Prior shelters usually take up a considerable amount of space when stored and during transport.

It is an object of the invention to seek to mitigate this disavantage.

According to one aspect of the invention there is provided a blank for erection to provide a shelter for a plant such as a tree, characterised by a plurality of elongate panel members, by the panel members being connected at or along adjacent longitudinal edges which are built-in during forming the blank and by each panel member having a shape in end elevation which with another panel member of members, when the shelter is erected, defines a space in which a plant may be received.

There may be two elongate panel members in the blank. This provides a relatively simple construction.

The shape may be a curved profile. This provides in use an erected shelter which is tubular and of a substantially curved outer configuration.

The longitudinal edges may be flexible by means of hinge lines extending longitudinally of the blank. This provides a relatively simple operation on erection.

The opposite longitudinal edges may comprise a seat for a support member for the erected shelter. This provides for ease of use in the field.

One of the profiles may comprise an additional profile which may comprise a seat for a support membre for the erected shelter. This provides for a concealment of the support member in use.

The flexible longitudinal edges between adjacent panel members may comprise a seat for a support member for the erected shelter. Again, this provides for ease of use in the field.

The blank may comprise means to maintain the blank in the erected position. This construction allows for the dispensation of additional ties.

This means may comprise complementary interlockable means at or adjacent the longitudinal free edges of the blank.

Ine interlocking means may comprise a V- or U-shaped socket extending adjacent one edge and a bead extending longitudinally adjacent the other edge. This provides a simple push-fit action which is nevertneless positive.

The blank may be extruded. This provides a simple constructional method.

The extruded blank may comprise a plastic fluted material.

According to a second aspect of the invention there is provided a shelter for a plant, erected from a blank as hereinbefore defined.

The shelter may be in combination with an elongate support member for supporting the shelter in a desired position. This provides a relatively simple support method.

According to a third aspect of the invention there is provided a set of parts for providing a plurality of shelters for plants, comprising a plurality of blanks as hereinbefore defined nested one in another, and a plurality of separate members each for use with a respective erected shelter to support same in a desired position.

Blanks ans shelters for plants erected from same are hereinafter described, by way of example, with reference to the accompanying drawings.

Figs. 1 to 8 show end elevational views of respective blanks according to the invention; and

Figs. 1a to 8a show shelters for plants such as young trees erected respectively from the blanks of Figs 1 to 8.

Referring to the drawings, in which like parts are referred to by like reference numerals, there are shown blanks 1 each for erection to provide a shelter 2 for a plant (not shown) such as a young tree, each comprising a plurality of elongate panel members 3, 4 connected integrally at or adjacent longitudinal edges 5 which are built-in during forming of the blank and are substantially inherently flexible, each panel member 3, 4 having a profile or shape 6 in end elevation which with another panel member or members defines a space 7 of the erected shelter 2 in which a plant may be received.

In each embodiment illustrated, the blank 1 comprises two panel members 3, 4, each of which has a profile 6 of generally semi-circular configuration in end elevation, as viewed in the Figures.

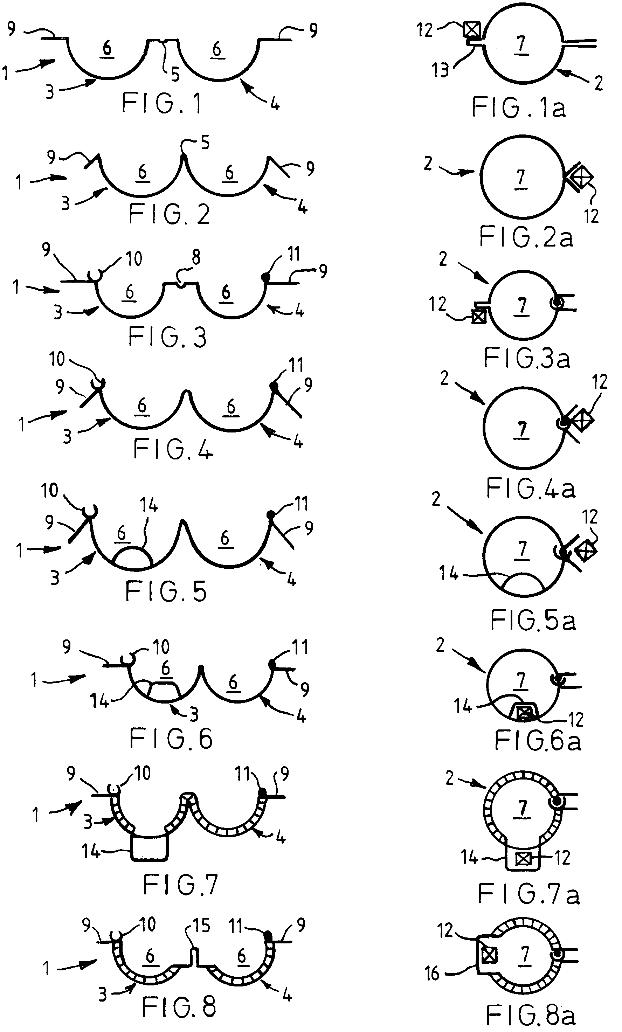

Adjacent longitudinal edges of the panel members 3, 4 are integrally linked together in the forming process which in the embodiments is by extruding a plastic material. The blank 1 may be formed by any suitable process such as by being extrusion moulded to provide a fluted product such as that sold under the Registered Trade Mark "CORREX" and as shown in Figs. 7 and 8. The material has two external skins spaced apart but secured together by integral walls.

The longitudinal joined edges 5, which are built-in during the forming process, may be inherently flexible, or may be made so by having a longitudinally extending hinge line 8 formed therein (Fig. 2, for example), the hinge line 8 being built-in or incorporated integrally with the blank during the forming process.

The opposite longitudinal edges 9 of the blank are free and are adapted to be secured together as by securing means (not shown) such as staples (Fig. 1) or by integral complementary interlocking means such as V- or U-shaped sokets 10 and beads 11 which are lockable in the sockets.

In use to erect a tree shelter 2, a blank 1 is folded about the longitudinal edges 5 and/or hinge lines 8 between the panel members 3, 4 to form a right cylindrical tube, the two profiles 6 thus facing one another to form a cylindrical space 7 in which a young tree can be received, the edges 9 being secured together by staples (Fig.1) or by the interlocking means 10, 11 (Figs. 3 - 8) to maintain the erected shelter 2 erect.

All the shelters 2 are used in the field with an elongate support member such as a wooden stake 12 which is planted in the ground adjacent the shelter 2 and secured to it by elastic or metal ties or other suitable means (not shown).

In Fig.1 the stake is positioned adjacent a projecting flange 13 formed when the edges 5 between the panel members 3,4 are turned back on one another on erection of the shelter.

In Fig. 2a the stare 12 is positioned between the splayed, adjacent longitudinal edges 9 of the blank, the ties passing through these edges and round the stare 12 to maintain the shelter erect and to secure it to the stake.

The stake 12 used in Fig. 3a is positioned similarly to that of Fig 1a, and the stake 12 of Fig 4a is positioned similarly to that of Fig. 2a.

In the blank of Figs. 4 - 7 one profile 6 has a further integral profile 14, of channel shape, which extends internally of the erected shelter (Figs. 5a and 6a), or externally thereof (Fig.7a). In each case the further profile forms an integral groove in which the respective stake 12 is received.

In Fig. 8a, the blank 1 has a tongue 15 formed by projecting parts of the longitudinal edges 5 between the panel members 3, 4. When the blank 1 is folded to erect the shelter 2, these tongues 15 form a channel-shaped groove 16 which is adapted for receiving a strake 12 (Fig. 8a).

It will be understood that the blank 1 may comprise more than two profiles 6, the profiles being of a curved shape so that when the blank is erected by flexing about the built-in edges 5 or hinge lines 8 between adjacent panels 4, 5, a tubular tree-shelter with a generally curved outer profile is formed, as described with respect to Figs. 1- 8.

In every embodiment it will be understood that the extrusions are light, readily made in a continuous length which can be cut transversely to provide particular lengths of blank. The blanks 1 thus made can be readily stored and transported substantially flat as in Fig. 1 as similar blanks can be nested or stacked vertically one on top of another, so that many more blanks can be stored and transported than was heretofore possible. The blanks 1 can then be erected in situ.

**Claims**

1. A blank for erection to provide a shelter for a plant such as a tree, characterised by a plurality of elongate panel members (3,4), by the panel members (3,4) being connected at or along adjacent longitudinal edges (5) which are built-in during forming the blank (1) and by each panel member (3,4) having a shape (6) in end elevation which with another profile or profiles when the shelter is erected defines a space in which a plant may be received.

2. A blank according to Claim 1, characterised by two elongate panel members (3,4) in the blank (1).

3. A blank according to Claim 1 or Claim 2, the shape (6) being a curved profile in end elevation.

4. A blank according to Claim 1 or Claim 2, characterised by the longitudinal edges (5) being flexible by means of hinge lines (8) extending longitudinally by the blank (1).

5. A blank according to any preceding claim, characterised by opposite longitudinal edges (9) comprising a seat (13) for a support member (12) for the erected shelter.

6. A blank according to any of Claims 1 to 4, charcterised by one of the panel members (3,4) comprising an additional profile (14) which comprises a seat for a support member (12) for the erected shelter.

7. A blank according to any one of Claim 1 to 7, characterised by the flexible longitudinal edge (5) between adjacent panel members (3,4) comprising a seat (13) for a support member 12 for the erected shelter.

8. A blank according to any preceding claim, characterised by means (10,11), preferably complementary interlockable means at or adjacent the longitudinal free edges of the blank, to maintain the blank (1) in the erected position.

9. A blank according to Claim 8, characterised by the interlocking means (10,11) comprising a V- or U-shaped socket (10) extending adjacent one edge and a bead (11) extending longitudinally adjacent the other edge.

10. A blank according to any preceding claim, characterised by being an extruded blank, preferably of a plastic fluted material.

11. A shelter for a plant, characterised by being erected from a blank (1) according to any preceding claim.

FIG.1

FIG.1a

FIG.2

FIG.2a

FIG.3

FIG.3a

FIG.4

FIG.4a

FIG.5

FIG.5a

FIG.6

FIG.6a

FIG.7

FIG.7a

FIG.8

FIG.8a

**European Patent Office**

**EUROPEAN SEARCH REPORT**

Application Number

EP 91 31 1447

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 325 490 (CORRUPLAST)<br><br>* the whole document * | 1-4,8,<br>10,11 | A01G13/00 |
| Y | GB-A-149 102 (TONKS)<br><br>* page 3, line 108 - page 4, line 55; figures 1-3 * | 1-4,8,<br>10,11 | |
| A | WO-A-8 701 904 (TUBEX LTD.)<br>* page 5, line 3 - line 24; figures 1-4 * | 5 | |
| A | GB-A-2 213 033 (TRETEC LTD.)<br><br>* page 3, line 18 - page 6, line 24; figures 1-9 * | 1-3,8,<br>10,11 | |
| A | US-A-4 665 645 (SCHAU)<br>* column 4, line 20 - line 54; figures 3,5,6 * | 9 | |
| | | | TECHNICAL FIELDS SEARCHED (Int. Cl.5 )<br><br>A01G |

The present search report has been drawn up for all claims

| Place of search | Date of completion of the search | Examiner |
|---|---|---|
| THE HAGUE | 19 MARCH 1992 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)